(19) Europäisches Patentamt
European Patent Office
Office européen des brevets

(11) **EP 0 805 375 A2**

(12) **EUROPÄISCHE PATENTANMELDUNG**

(43) Veröffentlichungstag:
05.11.1997 Patentblatt 1997/45

(51) Int. Cl.$^6$: **G03B 21/46**, G03B 21/50,
G02B 26/08, G02B 27/64

(21) Anmeldenummer: 97105663.5

(22) Anmeldetag: 05.04.1997

(84) Benannte Vertragsstaaten:
DE FR GB IT

(30) Priorität: 30.04.1996 DE 19617291

(71) Anmelder: **Raytheon Anschütz GmbH**
**24106 Kiel (DE)**

(72) Erfinder:
• **Baumann, Hans, Dr. (Dipl.-Phys.)**
**24223 Raisdorf (DE)**

• **Wieland, Manfred (Dipl.-Ing.)**
**24146 Kiel (DE)**
• **Glad, Roger**
**24107 Quarnbek (DE)**

(74) Vertreter: **Baumann, Eduard**
**Boehmert & Boehmert,**
**Anwaltssozietät,**
**Postfach 1201**
**85632 Höhenkirchen (DE)**

(54) **Verfahren, Vorrichtung und Einrichtung zur Verringerung des Bildstandfehlers bei der Projektion von Filmen**

(57)    Die Erfindung betrifft die Eliminierung des Bildstandfehlers bei der Projektion von Filmen (20), welche aus Einzelbildern (5) bestehen.

Hierbei wird dabei der Bildstandfehler durch einen Sensor ($C_1,C_2$;27) ermittelt und durch eine Einrichtung (22) zur Schrittweitenkompensation kompensiert.

Eine Vorrichtung zur Messung der Bildposition bei der Projektion von Filmen (20), welche aus Einzelbildern (5) bestehen, besitzt unter Ausnutzung der Perforation (4) einen Sensor ($C_1,C_2$;27) zur Messung des Bildstandfehlers.

Bei einer Einrichtung zur Korrektur eines Bildstandfehlers von Filmen (20), welche aus Einzelbildern (5) bestehen, ist vor den Filmen (20) als optisches Speichermedium bzw. vor dem optischen Aufnahmemedium ein optischer Kompensator (22) angeordnet.

FIG. 7

FIG. 4 a

EP 0 805 375 A2

## Beschreibung

Die Erfindung betrifft ein Verfahren zur Verringerung des Bildstandfehlers bei der Projektion von Filmen, welche aus Einzelbildern bestehen, gemäß dem Oberbegriff des Anspruches 1, eine Vorrichtung zur Messung der Bildposition gemäß dem Oberbegriff des Anspruches 13, und eine Einrichtung zur Korrektur eines Bildstandfehlers gemäß dem Oberbegriff des Anspruches 20.

Bei der Aufnahme eines Films wird der Film in der Kamera zur Belichtung schrittweise am Bildfenster vorbeigeführt.

Nach der Entwicklung und dem Anfertigen einer Kopie, die üblicherweise im Kontaktbelichtungsverfahren hergestellt wird, steht das Filmband mit seiner Folge von Einzelbildern zur Verfügung. Für die Wiedergabe mit einem Projektor wird das Filmband schrittweise an der Abbildungsoptik vorbeigeführt, wobei durch die rasch aufeinanderfolgende Projektion der Phasenbilder, physiologisch der Eindruck eines kontinuierlichen Bewegungsablaufes entsteht.

Der Transportschritt wird über mechanische Schrittschaltwerke (Malteserkreuz/Projektor, Greiferwerk/Kamera) oder auch über Schrittmotoren oder geregelte Gleichstromantriebe realisiert..

Die erzielbare Genauigkeit der Schrittweite des Aufnahmeschaltwerkes, des Wiedergabeschaltwerkes und der Teilung des Filmbandes legen den zu erreichenden Bildstand fest. Bei ungenügendem Bildstand wird das Folgebild nicht exakt auf die gleiche Stelle der Leinwand projiziert wie das vorhergehende Bild. Dieser Fehler wird als Bildstandfehler bezeichnet.

Eine Verminderung des Bildstandfehlers unter den für den Betrachter sichtbaren Bereich oder auch nur eine Annäherung an diese Größenordnung ist bis heute nicht möglich.

Die Kamerahersteller von Filmkameras versuchen den durch die Kamera bedingten Bildstandfehler zu minimieren. Gleiches gilt für die Filmprojektorhersteller. Die Genauigkeiten des Filmbandes sind in einem entsprechenden Normenwerk festgelegt.

Alles geschieht unter der Prämisse die Teilfehler unter 0,1 % zu halten und unter dem Gesichtspunkt, daß die Fehler der anderen vorgegeben sind. Die Teilfehler entstehen zeitversetzt, ortsversetzt und sind von unterschiedlichen Apparaten, Anwendern und Verfahren abhängig und damit nicht beeinflußbar. Selbst wenn der eigene Teilfehler, den man unter dieser Sichtweise nur beeinflussen kann, auf Null reduziert werden kann, bleibt noch ein theoretischer Restfehler von 0,2 %. In der Praxis ist allerdings der größte Fehleranteil dem Projektor zuzuordnen.

Als weitere Erschwernis kommt der Umstand hinzu, daß man genötigt ist, alle Verfahren kompatibel zu den Unmengen von Filmmaterial zu machen, die bis heute auf dem Markt verfügbar sind und jeden Tag hinzukommen. Es macht keinen Sinn diese Filme durch Sonderlösungen der wirtschaftlichen Nutzung zu entziehen.

Ein Verfahren gemäß dem Oberbegriff der Ansprüche 1, 13 und 20 ist aus der DE 3934420C2 bekannt. Hier sind Sensoren zur Messung des Bildstandes und eine Kompensation von Abweichungen vom Gewünschten durch Erzeugung von Fehlertabellen und eine adaptive empirische Steuerung des Antriebsmotors vorgesehen.

In der US 5,175,580 ist ein Fotoapparat beschrieben, der eine optische Kompensation von Vibrationen bei der Freihandfotografie, somit eine Bildstabilisierung, vorsieht.

Es ist deshalb die Aufgabe der Erfindung ein Verfahren, eine Vorrichtung und eine Einrichtung zu entwickeln, welche eine deutliche Verringerung des Bildstandfehlers bei der Projektion von Filmen ermöglichen.

Diese Aufgabe wird erfindungsgemäß durch ein Verfahren nach Anspruch 1, eine Vorrichtung nach Anspruch 13 sowie eine Einrichtung nach Anspruch 20 gelöst.

Hierbei soll eine Schrittweitenkompensation mittels eines optischen Ausgleichs vorgenommen werden. Dadurch ist es möglich, die Bilder eines Filmes, z.B. eines Kinofilmes, in definierter Zeitabfolge immer exakt auf den gleichen Punkt einer Leinwand zu projizieren. Dies führt zu einer wesentlich besseren Darstellung für den Betrachter.

Weitere vorteilhafte Merkmale sind in der nun folgenden Figurenbeschreibung beschrieben.

Die Erfindung wird im folgenden in beispielhafter Weise anhand von Zeichnungen erläutert, wobei weitere wesentliche Merkmale sowie dem besseren Verständnis dienende Erläuterungen und Ausgestaltungsmöglichkeiten des Erfindungsgedankens beschrieben sind.

Dabei zeigt:

Figur 1     eine Skizze zur Erläuterung des Bildstandfehlers;

Figur 2     den Grundaufbau eines kapazitiven Sensors zur Messung der Position eines Bildes bei der Projektion;

Figur 3     ein Schema der benötigten Signalaufbereitungsschaltung der Signale des Sensors aus Figur 3;

Figur 4a     eine Verwendung des Sensors aus Figur 3 zur horizontalen Bildpositionsmessung;

Figur 4b     die Beschaltung der Kapazitäten des Sensors aus Figur 3;

Figur 5     ein Blockschaltbild eines kapazitiven Schrittweitensensors;

Figur 6     den Signalverlauf während eines Schrittes beim Sensor aus Figur 5;

Figur 7     den funktionellen Aufbau eines optischen Ausgleichs von Schrittfehlern;

Figur 8     ein exemplarisches Ausführungsbeispiel für einen inkrementalen Sensor;

Figur 9     ein Funktionsschaltbild eines Gesamtsystems einer bildinhaltsgesteuerten Schrittweitenkompensation;

Figur 10a     das Schema einer statischen Abtastung;

Figur 10b     das Schema einer dynamischen Abtastung;

Figur 10c     das Ausgangssignal bei der Abtastung gemäß Figur 10b;

Figur 11     den Bildinhalt gemessen mit Photodiode und kapazitivem Wegsensor;

Figur 12     den gemessenen Bildstandfehler über Konturvergleich;

Figur 13     das Blockschaltbild eines vereinfachten Bildinhaltssensors;

Figur 14     eine graphische Darstellung des Brechungsgesetzes von Snellius.

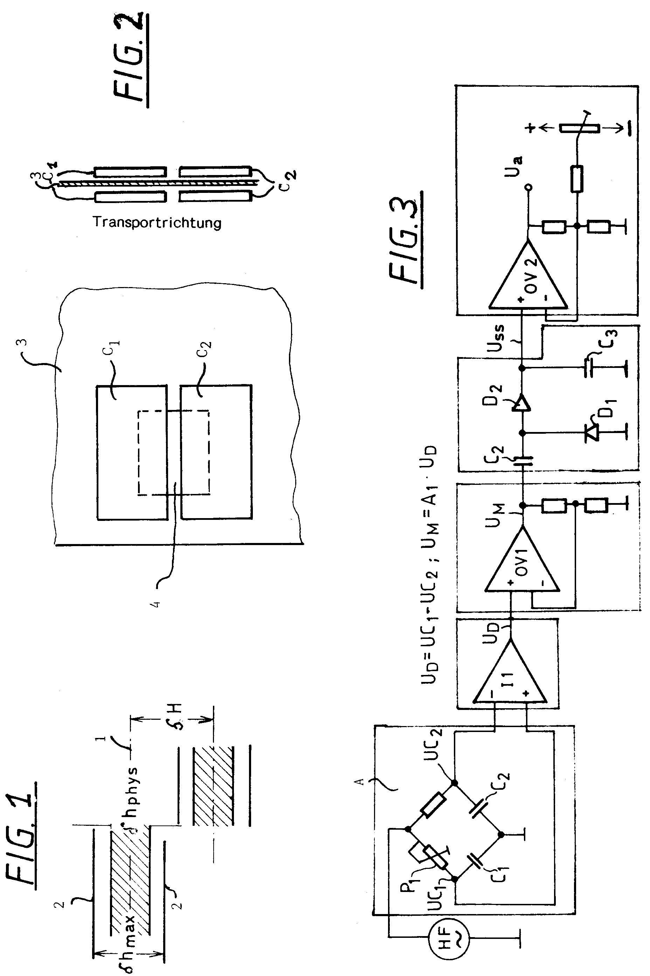

In Figur 1 ist ein Bild zur Erläuterung des Bildstandfehlers zu sehen, welcher durch Bildstandschwankungen in einem Projektor bei einer Filmprojektion entsteht.

Dabei bezeichnet $\delta h_{max}$ den "Mechanischen Höchstwert" der Bildstandschwankung, $\delta h_{phys}$ den "physiologischer Höchstwert" der Bildstandschwankung der schnellen Periode, $\delta H$ die Mittellinienschwankung der langsamen Periode. (1) die Mittelachse und (2) die Grenzen der schnellen Schwankung.

Ein Bildstandfehler macht sich auf zwei Weisen bemerkbar. Einmal tritt ein Schwanken der Umrisse des dargestellten Gegenstandes von der Größe $h_{max}$ um eine gedachte Mittellinie (1) mit einer Frequenz auf, die der Bildfrequenz des Schaltwerkes entspricht. Gleichzeitig ändert sich die Lage dieser Mittellinie (1) um einen Betrag $\delta_H$ in einer unregelmäßigen Bewegung. Diese Schwankung ist ca. 100 mal langsamer als die übliche Bildfrequenz und macht sich in einem Wandern des Bildes bemerkbar.

Die Bildstandfehler mit der schnelleren Periode ergeben ein Verwackeln und Verwaschen der Konturen des Bildes und damit eine Kontrastschwächung.

Im Idealfall sollte der Bildstandfehler so klein sein, daß er mit dem Auge nicht mehr wahrnehmbar ist, also kleiner als das Auflösungsvermögen des Auges. Die daraus resultierenden zulässigen Bildstandfehler betragen unter Berücksichtigung der möglichen Sehschärfe:

| Format | Fensterbreite | Bildstand (optimal zulässiger Fehler) |
|---|---|---|
| 35 mm | 20,9 mm | 7,35 $\mu$m + 0,035 % |
| 16 mm | 9,6 mm | 3,36 $\mu$m + 0,035 % |

Die obigen Werte sind mit den bekannten Verfahren nach dem bekannten Stand der Technik nicht erreichbar. Eine Abschwächung der Forderung zu noch zulässigen Bildstandfehlern, die vom Betrachter subjektiv noch nicht als störend empfunden wird, führt zu folgenden Daten:

| Format | Fensterbreite | Bildstand (Akzeptabler Fehler) |
|---|---|---|
| 35 mm | 20,9 mm | 62,7 $\mu$m 0,3 % |
| 16 mm | 9,6 mm | 28,8 $\mu$m 0,3 % |

Die obigen Werte sind um fast einen Faktor 10 schlechter als der theoretische Ansatz.

Wenn man theoretisch davon ausgeht, daß die Einzelfehler (Aufnahme, Filmband, Wiedergabe) zu gleichen Teilen zum Gesamtfehler beitragen, dann besteht für alle an der "mechanischen" Abbildung beteiligten Komponenten Filmkamera, Filmband sowie Projektor eine Genauigkeitsanforderung von 0,1 %.

Auf die Komponenten bezogen, ist ein Teilbildstandfehler von 0,1 % nur mit Mühe unter hohen Kosten erreichbar und stellt letztendlich nur einen Kompromiß dar, vorgegeben durch die technische Machbarkeit.

Eine Verminderung des Bildstandfehlers unter den für den Betrachter sichtbaren Bereich oder auch nur eine Annäherung an diese Größenordnung, ist bis dato nicht möglich.

Gerade diese kinematischen Abbildungsfehler sind neben den unterschiedlichen Bildwandleuchtdichten, Ursache für den deutlichen Qualitätsunterschied zwischen Kinobild und Diaprojektion.

Nun gibt es Möglichkeiten, die Position des projizierten Bildes auf der Leinwand mit einem optischen Kompensator derart zu verschieben, daß die Fehler des mechanischen Schrittes für den Betrachter erheblich verringert werden können.

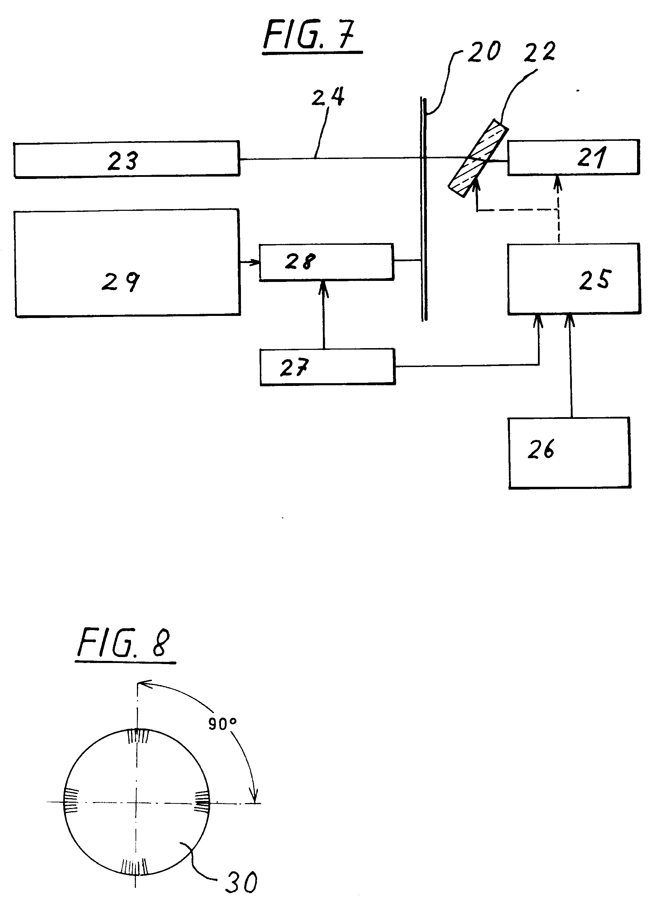

Es ist möglich, den mechanischen Schrittfehler bei der Projektion optisch zu kompensieren. Gemäß einem Ausführungsbeispiel von Figur 7 wird dazu in den Strahlengang des Projektors zwischen Bildfenster hinter dem Filmband (20) und Objektiv (21) eine planparallele Glasplatte (22) eingebracht. Diese Glasplatte (22) ist so groß, daß alle an der Abbildung beteiligten Lichtstrahlen der Projektionslampe (23) durch sie hindurchgehen.

Die Platte (22) ist derart gelagert, daß sie um eine durch sie hindurchgehende Achse in Höhe der Bildmitte, um diese mittels eines Motors (z.B. Torquer, Schrittmotor) in beide Richtungen gedreht werden kann.

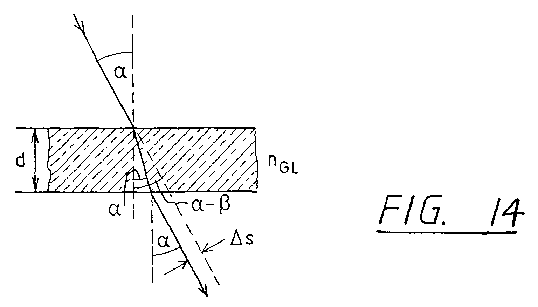

Steht die planparallele Glasplatte (22) nicht lotrecht zur optischen Achse (24), dann erfahren die durch sie hindurchgehenden Lichtstrahlen einen Parallelversatz. Dieser Parallelversatz kann abhängig vom Drehwinkel und damit Auftreffwinkel verändert werden. Der Zusammenhang ergibt sich aus dem Brechungsgesetz von Snellius (Fig.14):

$$\Delta s = d. \sin (1 - 1/n)$$

Die Position des Bildes auf der Leinwand ergibt sich daher aus zwei Vorgängen:

Als erstes aus dem Vorschub des Schrittschaltwerkes und zum anderen Teil aus der Verschiebung des Bildes in Abhängigkeit vom Drehsinn und dem Drehwinkel der planparallelen Glasplatte (22).

An die Präzision des Schrittschaltwerkes werden kaum noch Anforderungen gestellt. Der mechanische bzw.elektromechanische Antrieb kann vereinfacht, ungenauer und damit auch verbilligt werden.

Der Schrittfehler muß lediglich so klein sein, daß er noch durch Drehung der Glasplatte (22) ausgeglichen werden kann (max. Drehwinkel bei vorgegebener Glasdicke und Brechungsindex). Der mechanische Aufwand wird reduziert, entstehende Ungenauigkeiten durch Verschleiß können bei geeigneter Anordnung automatisch kompensiert werden.

Der Vorteil liegt darin, daß es möglich ist die Position des Bildes optisch zu korrigieren, ohne Eingriff in die mechanischen Transportmechanismen mit den dort vorhandenen großen Massen, Trägheitsmomenten und den nicht zu kalkulierenden sonstigen Unzulänglichkeiten wie Schlupf, Dehnung, Verschleiß usw..

Neben dem eingehend erläuterten horizontalen Bildstandfehler gibt es auch einen entsprechenden vertikalen Bildstandfehler. Dieser Fehler ist aber üblicherweise weitaus geringer und leichter beherrschbar. Er wird durch die Filmführung festgelegt. Der vertikale Bildstandfehler kann in gleicher Weise wie der horizontale Bildstandfehler optisch kompensiert werden. Die Drehachse einer entsprechenden planparallelen Glasplatte liegt hier jedoch vertikal zur optischen Achse des Projektors.

Die Kompensation beider Fehler (horizontal und vertikal) ist mit zwei planparallelen Glasplatten, mit senkrecht aufeinander stehenden Drehachsen möglich, oder einer kardanisch aufgehängten Glasplatte mit zwei unabhängigen Antriebskomponenten.

Neben der beschriebenen Methode der Bildstandkorrektur gibt es noch die Möglichkeit, eine Linse des Objektivsystems parallel zu verschieben oder die Verwendung von Drehkeilen (nicht in den Figuren dargestellt).

Um den Bildstand auf eine der angegebenen Arten verbessern, bzw. kompensieren zu können, ist es notwendig den Bildstandfehler zu erfassen, um aus der gemessenen Abweichung eine Steuerung des optischen Ausgleiches ableiten zu können. Die Messung des tatsächlichen Transportschrittes und dessen Abweichung vom Sollwert 19 mm sollte so dicht wie möglich am Projektionsfenster erfolgen. Da es sich um eine Summe von Einzelfehlern handelt, können nur die Fehler gemessen und damit korrigiert werden, die auf der Strecke zwischen Antrieb (z.B. Malteserkreuz) und Position des Sensors auftreten.

Der unmittelbare Antrieb des Filmes erfolgt über die Schaltrolle. Eine Umdrehung der Schaltrolle besteht üblicherweise aus vier Teilschritten à 90° entsprechend vier Bildern. Die tatsächliche Schrittweite (exakter Drehwinkel von 90°) kann auf der Schaltrolle über eine Indexscheibe mit genügend hoher Teilung, vorzugsweise optisch, abgegriffen werden.

90°-Drehwinkel entsprechen einer Schrittweite von 19 mm. Um eine Bildstandgüte von 0,1 % erreichen zu können, benötigt man eine Positioniergenauigkeit von 20 µm. Dies entspricht einer Teilung von > 4 x 950 = 3800 Inkrementen mit einer entsprechenden Absolutgenauigkeit.

Eine kostengünstigere Alternative besteht darin, die hohe Winkelauflösung nur in engen Bereichen, die dem jeweiligen Schrittende entsprechen, zu fordern.

Dies kann mit einer 360° Indexscheibe (30) mit partieller Winkelauflösung erreicht werden (siehe Figur 8).

Der verbleibende, vom Projektor verursachte Bildstandfehler resultiert nur noch aus Ungenauigkeiten (z.B. Filmdehnung), die aus der räumlichen Diskrepanz zwischen Sensor und Projektionsfenster herrühren.

Die schematische Zeichnung in Fig. 7 zeigt das für eine Bildstandkorrektur (hier nur für die horizontale Bildstandkorrektur dargestellt) benötigte Gesamtsystem bestehend aus:

- Bildstandmeßeinrichtung (Sensor) (27) an der Schaltrolle (28) eines mechanischen Antriebs (29)(allgem. Getriebe, Malteserkreuz, Schrittmotor, Positioniermotor),
- Referenzsignalquelle (entsprechend 19 mm Sollschrittweite) (Schrittweitenreferenz 26),
- Vergleicher Soll-/Istwert und Regler mit Ansteuerungsstufe für das Stellglied (25),
- Optischer Kompensator (planparallele Platte, Drehkeil, translatorisch verschiebbare Linse) (22).

Um Fehler weitestgehend zu vermeiden, sollte jedoch eine Positionsbestimmung unmittelbar am Filmband selbst durchgeführt werden und dort vorzugsweise in Höhe des Bildfensters.

Das Problem liegt darin, auf dem Filmband eine geeignete Markierung oder Struktur zu finden, die geeignet wäre um eine Positionsbestimmung durchzuführen.

Es gibt keine einheitlichen optischen Markierungen. Bildstrich, Rahmen, Fenster, Tonspur usw. variieren unter Umständen von Film zu Film.

Das Aufkopieren von Marken, die später abgetastet werden könnte, ob optisch oder als Ton, würden eine Inkompatibilität mit dem bereits vorhandenen Filmmaterial mit sich bringen und ist daher nicht praktikabel.

Das Einzige, was eine gewisse Präzision aufweist und weltweit genormt ist, ist die Perforation. Es ist aber z.B. nicht möglich eine Perforationskante optisch mit einer hinreichenden Genauigkeit zu detektieren , die in der Größenordnung von $< 20\ \mu m$ liegen muß, um in einen Bereich zu kommen, der heute rein mechanisch ohnehin schon möglich ist.

Dabei ist zu bedenken, daß die Perforationslöcher gestanzt sind, also keine steile Flanken aufweisen. Darüber hinaus können die Löcher im Betrieb ausfransen oder/und verschmutzen.

Man kann nun aber die geschilderten Probleme umgehen und dennoch zu einer Präzisionsmessung kommen, die auch im Routinebetrieb (Kino) anwendbar ist.

Aus vorgenannten Überlegungen kommt nur ein integratives Meßverfahren in Frage, bei dem sich geometrische Unzulänglichkeiten oder lokale Variationen in der optischen Beschaffenheit nicht auswirken.

Dies kann mit einem kapazitiven Sensor, wie in Figur 2 dargestellt, erreicht werden.

Der Sensor besteht aus einem Differenzkondensator ($C_1$ , $C_2$). Der Film (3) läuft durch die beiden Platten, aus denen der Kondensator ($C_1$ , $C_2$) besteht. In der gezeichneten Mittenstellung steht das Perforationsloch (4) symmetrisch zu den Kondensatoren $C_1$ und $C_2$. Die Kapazität der jeweiligen Kondensatoren ($C_1$ , $C_2$) berechnet sich wie folgt:

$$C = (\varepsilon r \times \varepsilon o \times F)/d \qquad \text{Formel 1)}$$

$$C = ((\varepsilon o \times ((\varepsilon rf + \varepsilon rl)/2)) \times F)/d \quad \text{Formel 2)}$$

mit $\quad \varepsilon rf:$ = Dielektrizitätskonst. des Filmmaterials
$\quad F :$ = Fläche der Kondensatorplatten
$\quad \varepsilon o :$ = elektrische Feldkonstante
$\quad d :$ = Plattenabstand
$\quad \varepsilon rl:$ = Dielektrizitätskonstante der Luft

Zur vereinfachten Abschätzung wird davon ausgegangen, daß die Kondensatorplatten eine Fläche haben, die identisch mit der Lochgröße (4) ist. Formel 2 berücksichtigt den Umstand, daß der Plattenabstand größer ist als die Dicke des Filmmaterials und sich das wirksame Dielektrikum aus der relativen Dielektrizitätskonstanten des Luftanteiles und des Filmanteiles zusammensetzt.

Je nach Position des Filmbandes (3) ändert sich die Lage des Perforationsloches (4) im Bezug zu den Kondensatoren ($C_1$ , $C_2$).

In der gezeichneten Stellung sind die Kapazitäten $C_1$ und $C_2$ gleich groß. Wird der Film (3) in die angegebene Richtung transportiert, dann wandert das Perforationsloch (4) immer mehr in den Kondensator $C_1$ und

vermindert dort die Kapazität, weil sich dadurch auch das Dielektrikum ändert. Die Kapazität des Kondensators $C_2$ hingegen steigt in gleichem Maße durch die Erhöhung des Dielektrikumanteiles.

Im Grenzfall ist das Perforationsloch (4) vollständig im oberen Kondensator $C_1$, während der untere Kondensator $C_2$ voll mit dem Dielektrikum "Film" (3) ausgefüllt ist. Ein Maß für die Veränderungen ist die Lage der oberen und unteren Kante des Perforationsloches (4), die Lochposition. Die seitlichen Begrenzungen haben keinen Einfluß.

Die maximale Änderung der Kapazitäten kann berechnet werden:

mit $\varepsilon f = 2,5$ ; $\varepsilon o = 8,85419\ pF/m$ ; $\varepsilon l = 1,0006$; $d = 0,2$ mm ; $F = 5,6$ mm; Lochgröße $= 5,6\ mm^2$; Filmdicke $= 0,1$ mm

nach

$$3)\ C\ min. = 0,24\ pF \qquad \text{Formel 1:}$$

$$4)\ C\ max. = 0,43\ pF \qquad \text{Formel 2:}$$

Der Meßeffekt kann erhöht werden, wenn man mehrere Perforationslöcher und deren Stellung gleichermaßen sensiert.

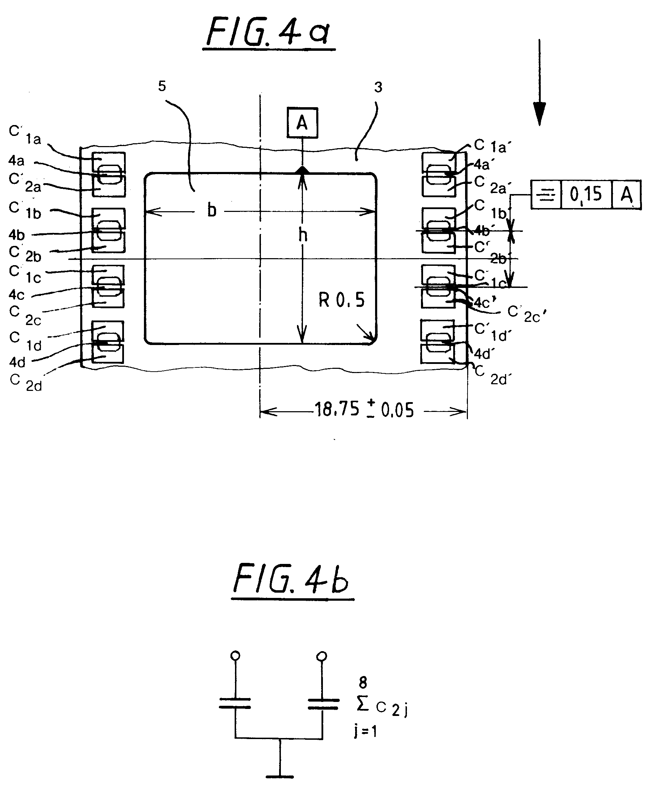

Werden (siehe Figur 4a) z.B. acht Perforationslöcher (4a-4d, 4a'-4d') detektiert (entsprechend einem Filmbild(5)) und die kapazitiven Sensoren ($C_{1a}$-$C_{1d}$, $C_{1a'}$-$C_{1d'}$, bzw. $C_{2a}$-$C_{2d}$, $C_{2a'}$-$C_{2d'}$) parallel geschaltet, ergibt sich eine Gesamtkapazitätsänderung für die oberen ($C_{1a}$-$C_{1d}$, $C_{1a'}$-$C_{1d'}$) bzw. unteren ($C_{2a}$-$C_{2d}$, $C_{2a'}$-$C_{2d'}$) Kondensatoren von:

$$\delta\ \varepsilon C_{oben} = 1,52\ pF \qquad\qquad 5)$$

$$\delta\ \varepsilon C_{unten} = 1,52\ pF \qquad\qquad 6)$$

Der erzielbare lineare Meßbereich ist gleich der doppelten Perforationslochhöhe, abzüglich eines nicht sensitiven Bereiches, der dem Abstand der Kondensatoren C1/C2 entspricht (z.B. 0,2 mm je nach Layout):

$$\text{Meßbereich } (\delta\ Z) = +/-\ 1,75\ mm \qquad 7)$$

Figur 3 zeigt eine Schaltung zur Aufbereitung des Sensorsignales.

Der Differenzkondensator C1/C2 wird in einer Brückenschaltung (A) betrieben. Die Brücke wird wechselspannungsmäßig aus einem HF-Generator gespeist.

Mit dem Potentiometer ($P_1$) kann die Brücke für den Fall gleicher Kapazitäten abgeglichen werden ($U_D$ = Minimum). Eine Änderung der Kapazitäten bringt eine Verstimmung der Brücke mit sich.

Die den Instrumentenverstärker (I1) erzeugte Differenzspannung wird mit dem Operationsverstärker OV1 verstärkt und einem Spitzenspannungsmesser (SP, bestehend aus C2, C3, D1, D2) zugeführt.

Mit dem Operationsverstärker OV2 wird das Gleichspannungssignal noch einmal verstärkt und eine eventuelle Offsetkorrektur durchgeführt.

Die horizontale Bildposition wird vorzugsweise direkt am Bildfenster (5) gemessen. Ein Beispiel für eine Realisierung ist in Figur 4a wiedergegeben, wobei Figur 4b eine schematische Beschaltung zeigt.

Es wird die Anordnung der einzelnen Kondensatoren ($C_{1a}$-$C_{1d}$, $C_{1a'}$-$C_{1d'}$, bzw. $C_{2a}$-$C_{2d}$, $C_{2a'}$-$C_{2d'}$) gezeigt und deren Lage zum Projektorfenster in Höhe des Bildfensters (5) und damit auch zur Bildmitte. Mit dieser Anordnung wird das Bild zur Mitte hin symmetriert.

Die Kondensatoren ($C_{1a}$-$C_{1d}$, $C_{1a'}$-$C_{1d'}$, bzw. $C_{2a}$-$C_{2d}$, $C_{2a'}$-$C_{2d'}$) können in Form zweier gedruckter Schaltungen realisiert werden, die in einem Abstand von z.B. 0,2 mm sich leiterseitig gegenüberliegen, so daß der Film (3) durch sie hindurch laufen kann.

Bei einer Anordnung direkt im Projektorfenster müssen die Leiterplatten in der Mitte eine Öffnung aufweisen, die die Projektion erlaubt.

Mit dieser Anordnung ist die projizierte Bildposition nur noch von den Fehlern bei der Aufnahme, dem Kopiervorgang und den Toleranzvorgaben für die Bildposition in Bezug zur Perforation abhängig. Projektorseitige Schrittfehler gehen nicht mehr ein.

Auf gleiche Art und Weise kann auch der Versatz des Bildes parallel zur Laufrichtung (vertikale Bildposition) gemessen werden.

Die Kondensatoren sind in diesem Falle um 90° zu drehen. Die obere und untere Kante wie definiert, hat dann keinen Einfluß auf das Meßergebnis, wohl aber die seitlichen Begrenzungen der Perforationslöcher.

Es ist natürlich möglich beide Messungen durchzuführen, durch Kombination der unterschiedlichen Kondensatoranordnungen.

Eine reine Bildpositionsmessung wie vorangehend ausgeführt, weist einige Nachteile auf, die durch eine etwas andere Anordnung vermieden werden können. Wenn die Perforation Störungen aufweist (z.B. eingerissene Ecken, starke Verschmutzung), kann die Symmetrierung nicht mehr so exakt durchgeführt werden wie gewünscht.

Als worst-case sei angenommen, daß ein Perforationsloch fehlt. Dies führt dazu, daß bei tatsächlicher Mittenstellung die Meßbrücke eine Verstimmung aufweist. Der gesamte Meßweg von 3700 μm entspricht einer maximalen Kapazitätsänderung von 16 Einzelkondensatoren.

In der gemachten Annahme würde sich die Kapazität eines einzelnen Kondensators nicht ändern, woraus sich der Fehler ergibt:

$$3700 \ \mu m/16 = 231 \ \mu m \qquad (8)$$

Es gibt die Möglichkeiten selbst einen solchen Perforationsfehler, der in der Praxis nicht auftreten wird, ohne Genauigkeitsverlust zu tolerieren.

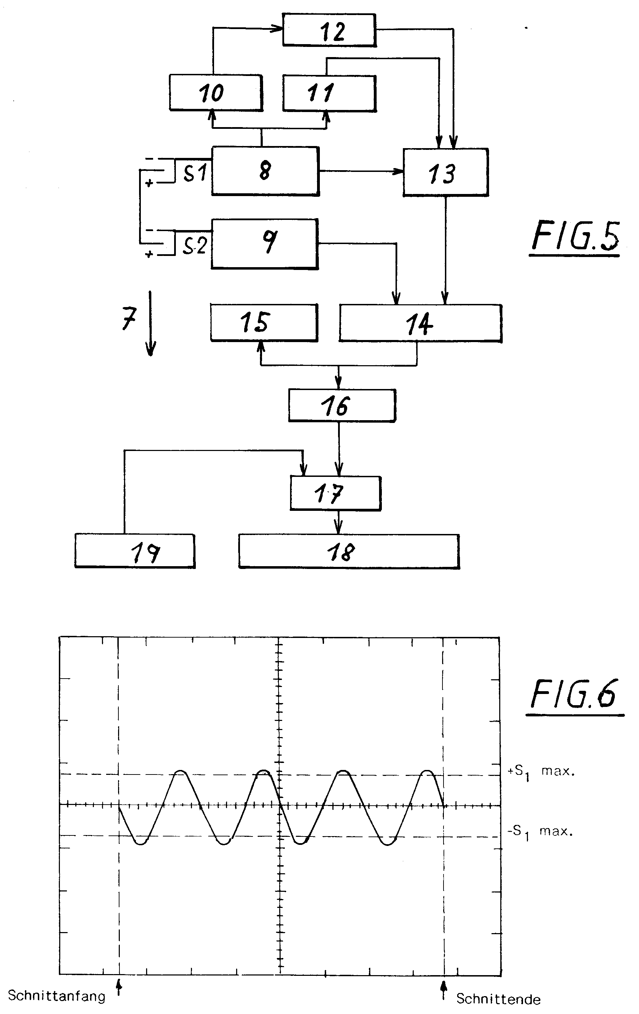

Dies ist mit einem erweitertem kapazitiven Schrittweitensensor möglich, der in Figur 5 mit der zugehörigen Signalverarbeitung als Blockschaltbild dargestellt ist.

Über einen kapazitiven Sensor (8) wird die Stellung (S1) des Bildes vor dem Bildfenster gemessen. Diese Stellung wird als Nullpunkt für den folgenden Schritt definiert. Der zugehörige Meßwert wird über eine Sample & Hold-Schaltung (13) gespeichert.

Der Film wird mechanisch einen Schritt in Transportrichtung (7) weiter transportiert. Das gleiche Lochbild, das vorher für die Bestimmung des Nullpunktes benutzt worden ist, wird durch den Schritt vor einen weiteren kapazitiven Positionssensor (9) geführt, um die Ist-Schrittweite zu messen.

Beide Positionssensoren (8, 9) haben bezüglich der Mitte ihres Empfindlichkeitsbereiches einen wohl definierten, mechanischen Abstand von 19 mm. Die Ist-Schrittweite ergibt sich aus der folgenden Bestimmung:

Abstand der Nullpunkte beider Sensoren (8, 9) plus den gemessenen Abweichungen SI und S2 von den beiden Nullpunkten.

Auf diese Weise wird der tatsächliche Schritt direkt am Filmfenster gemessen.

Der Signalverlauf während eines Schrittes ist in Figur 6 dargestellt.

Da während eines 19 mm Schrittes jeweils 4 Perforationslöcher einen Kondensator durchlaufen, ergibt sich der dargestellte Signalverlauf.

Das Signal ist nur innerhalb +/- $S_{1max}$ linear vom Verschiebeweg abhängig. In den Minima und Maxima ist das Ausgangssignal wegunabhängig und konstant. Diese toten Zonen entsprechen einem Weg von 0,2 mm und rühren vom Abstand der Kondensatoren CI/C2 zueinander her.

Da für eine Messung nur Werte am Schrittanfang und Schrittende maßgeblich sind, muß das Meßsignal bearbeitet werden, um Zwischenwerte ignorieren zu können.

Dies wird im Blockschaltbild (Figur 5) durch die Komparatoren (10, 11) und das Ausblendnetzwerk (12) realisiert.

Der erste Komparator (10) stellt sicher, daß nur Signale innerhalb des linearen Wegmeßbereiches weiterverarbeitet werden. Dies ist während eines Schrittes 9 mal der Fall.

Das Ausblendnetzwerk (12) schaltet erst beim letzten Unterschreiten von $S_{1max}$ das Meßsignal auf die Sample & Hold-Schaltung (13) weiter.

Der zweite Komparator (11) detektiert das Schrittende und triggert den S&H (13).

Der Film (6) wird in Figur 5 in Richtung (7) bewegt, wobei eine Schrittweite 19 mm beträgt. Der obere Positionssensor (8) mißt dabei den Nullpunkt, während der untere Positionssensor (9) die Schrittweite mißt. Der Meßwert des oberen Positionssensors (8) geht dabei zum einen auf zwei Komparatoren (10, 11). Der erste Komparator (10) überprüft die Bedingung $S_1 < +/- S_{1max}$ und erwirkt gegebenenfalls eine Ausblendung (12). Der zweite Komparator (11) überprüft die Bedingung $\delta S_1/dt = 0$ und liefert sein Ausgangssignal direkt auf eine Sample & Hold-Schaltung (13). Diese Sample & Hold-Schaltung (13) erhält außerdem das Signal des ersten Positionssensors (8).

Der Ausgang der Sample & Hold-Schaltung (13) und der Ausgang des zweiten Positionssensors (9) liegt an einer Vergleichsschaltung (14) an, welche die Eingangswerte wie folgt miteinander verknüpft:

$$S_W - (+/-S_1) + (+/-S_2)$$

Die Schaltung (15) liefert ein Referenzsignal für die Schrittweite 19 mm. In der Schaltung (16) wird die Differenz ermittelt, welche als SOLL-Wert in den PI-Regler (17) eingeht. Der IST-Wert wird durch den Drehwinkelsensor (19) geliefert, welcher mit dem Torquer bzw. mit einer an diesem angebrachten planparallelen Platte (18) fest verbunden ist. Der PI-Regler (17) liefert dann ein Ausgangssignal, welches zu einer Verstellung des Torquers bzw. der an diesem angebrachten planparallelen Platte (18) führt, bis der gewünschte Zustand erreicht ist.

Eine weitere Möglichkeit der Schrittweitenmessung bietet der Bildinhalt.

Dies kann wie folgt erfolgen:

Über einen ortsfesten, starr mit dem Projektor verbundenen optischen Sensor (z.B. eine CCD-Kamera), kann das momentane Bild erfaßt und gespeichert werden. Das Folgebild mit gleichem Inhalt muß exakt an der gleichen Stelle im Abstand von 19 mm erscheinen. Ist dies nicht der Fall, dann liegt ein Bildstandfehler vor. Die Abweichung kann über eine Signalverarbeitung berechnet werden.

Es ist praktisch nicht möglich, den Film mechanisch in die gewünschte Position nachzufahren. Das Differenzsignal kann effizienter als Steuersignal für den schon beschriebenen optischen Ausgleich verwendet werden, der das Bild auf der Leinwand mit dem vorangehenden Bild zur Deckung bringt.

Das Verfahren ist kompatibel mit allen bekannten Verfahren und Filmen, Materialien und unabhängig von Kameraherstellern, 22222Kopierverfahren usw..

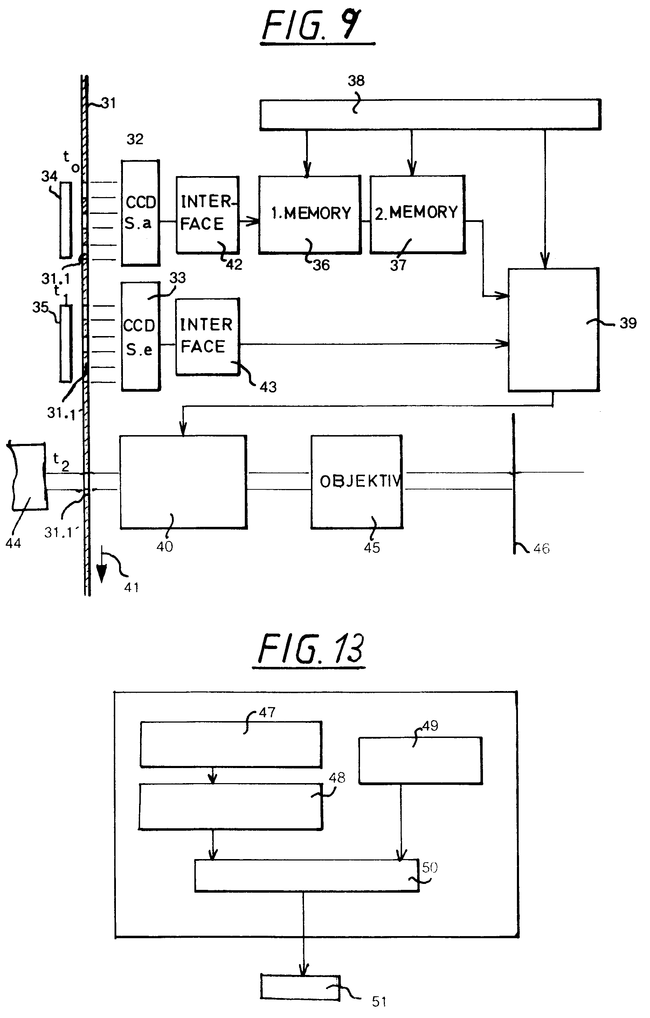

In Figur 9 ist nun ein Gesamtsystem einer bildinhaltgesteuerten Schrittweitenkompensation dargestellt.

Oberhalb des Bildfensters befinden sich in 19 bzw. 38 mm Abstand je ein CCD-Bildsensor (32, 33) am Schrittanfang und am Schrittende. Das vor diesen Sensoren (32, 33) liegende Filmbild (31) wird durch zwei flächige Lichtquellen (34, 35) gleichmäßig ausgeleuchtet.

Die beiden CCD-Bildsensoren (32, 33) sind jeweils über ein Interface (42, 43) mit dem Speicher (36) bzw. mit dem Vergleiche (39) verbunden.

Im Bereich des optischen Ausgleichs (40) wird das von dem Filmband (31) durchgelassene Licht der Strahlenquelle (44) durch ein Objektiv (45) auf eine Leinwand (46) abgebildet. Dabei gibt der Pfeil (41) die Laufrichtung des Filmbandes (31) an. Das durch das Objektiv (45) zum Zeitpunkt $t_2$ auf die Leinwand (46) abgebildete Bild (31.1") entspricht dem Bild (31.1) zum Zeitpunkt $t_0$ vor dem ersten CCD-Sensor (32).

Nach einem abgeschlossenen Transportschritt zur Zeit $t_0$ tastet der CCD-Sensor (32) am Schrittanfang das vor ihm stehende Bild (31.1) ab. Das erfaßte Bild (31.1) wird im ersten Bildspeicher (36) abgelegt.

Das Filmband (31) wird einen Schritt weiter transportiert und zur Zeit $t_1$ steht das bereits vorher abgetastete Bild (31.1') vor dem zweiten CCD-Sensor (33) am Schrittende.

Das Steuerwerk (38) schiebt den Inhalt des ersten Bildspeichers (36) in den nachfolgenden zweiten Bildspeicher (37). Am Eingang des Vergleichers (39) stehen die Bildsignale zur Zeit $t_0$ und $t_1$ gleichzeitig an. Es handelt sich um das gleiche Bild (31.1, 31.1'), aber an unterschiedlichen Orten erfaßt (vor dem Schritt/nach dem Schritt).

Während das Steuerwerk (38) das Bild (31.1) aus dem ersten Speicher (36) in den zweiten Speicher (37) schiebt, wird das Folgebild erfaßt und in den ersten Bildspeicher (36) geladen.

Im Vergleicher (39) kann die Lage des Bildes (31.1) vor und nach dem Schritt verglichen werden. Dafür gibt es die unterschiedlichsten Methoden. Liegt kein Bildstandfehler vor, dann ist z.B. die Differenz beider Abbildungen gleich Null. Bei nicht exaktem Transportschritt wird das Signal ungleich Null, je nach Lage mit positiven bzw. negativen Vorzeichen.

In einem CCD-Element (32, 33) ist die Bildinformation zeilenweise abgelegt. Durch Hoch- bzw. Herunterschieben der Bildinformation im Zeilenabstand (entsprechend der Filmtransportrichtung) kann die Differenz beider Abbildungen zu Null gemacht werden. Die Anzahl der Zeilen und die Schieberichtung geben den Bildstandfehler an. Dieses Signal kann als Steuersignal für den optischen Ausgleich (40) herangezogen werden.

Es ist dabei unerheblich, daß der optische Ausgleich (40) den Strahlengang eines anderen Bildes verschiebt, wenn man davon ausgeht, daß das Filmband (31) zumindest in einem Bereich von drei aufeinanderfolgenden Bildern als starr angesehen werden kann (keine Längenänderung des Bandes). Entscheidend ist, daß vor jedem Transportschritt ein neuer Bezugspunkt festgelegt wird, der sich am Bildinhalt orientiert. Dieser Bezugspunkt gilt als Maß für den exakten Schritt.

Es ist nicht zwingend notwendig den gesamten Bildinhalt zu vergleichen. Durch eine Bildverarbeitung kann die Informationsfülle auf das Wesentliche reduziert werden, wie es aus Bildstabilisierungs-Einrichtungen für Videokameras bekannt ist.

Nachteilig an dem vorgeschlagenen System ist der relativ große. Aufwand der getrieben werden muß für die Realisierung. Werden doch zwei CCD-Kameras (32, 33) und eine Bildverarbeitung benötigt. Es gibt jedoch Möglichkeiten einer kosteneffizienteren Lösung, basierend auf den gleichen Basisüberlegungen.

Um einen preisgünstigeren Bildinhaltssensor zu erhalten, müssen folgende Voraussetzungen erfüllt werden:

Um in den Bereich zu kommen, in dem ein Bildstandfehler nicht mehr sichtbar ist, benötigt man einen Sensor mit einer Ortsauflösung von

$$\text{Auflösung} <= 7{,}35\ \mu m$$

(7,35 μm entsprechend einem Bildstand von 0,035 % bei einem 35 mm Film).

Ohne vergrößernde Optik kann dies bei statischer Abtastung nur mit CCD-Elementen erreicht werden (Pixel min. 7 x 7 μm).

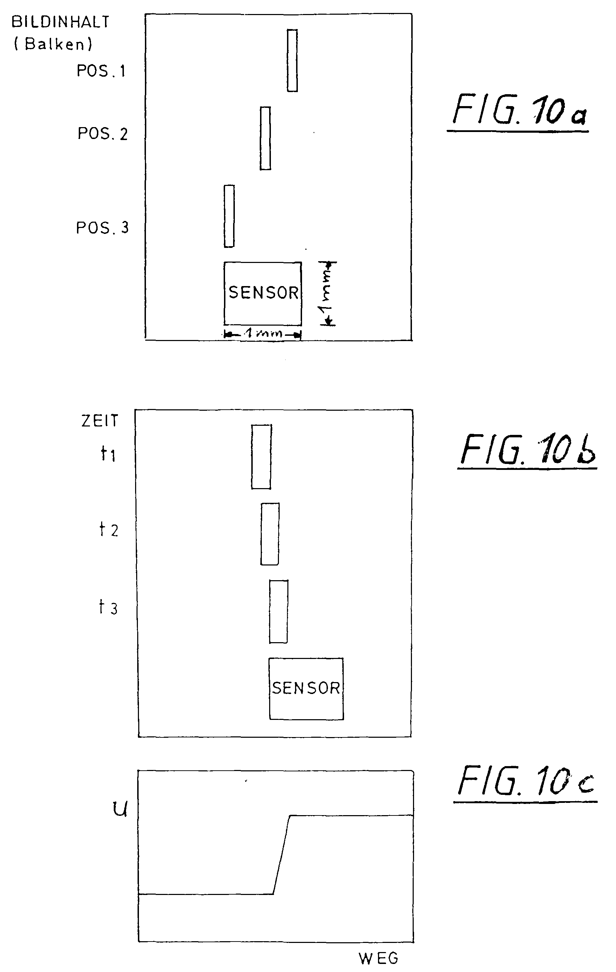

Macht man sich den Umstand zu Nutze, daß bei einem Projektor der Film ohnehin transportiert wird, dann ist diese Auflösung auch mit einer einfachen Photodiode mit einer großen aktiven Fläche von z.B. 1 x 1 mm» realisierbar, wie folgende Überlegungen zeigen (siehe hierzu Figur 10a).

Bei der statischen Abtastung (Bild/Balken fest, Sensor fest), ist das Ausgangssignal des Sensors konstant, unabhängig von der Position des Balkens (Pos 1, Pos 2, Pos 3). Eine kleinere Bildauflösung als die aktive Sensorfläche ist nicht möglich.

Anders sehen die Verhältnisse aus, wenn das Bild, wie oben dargestellt, an dem Sensor vorbeigeführt wird (siehe hierzu Figur 10b). Das Ausgangssignal U (siehe Figur 10c) ändert sich unmittelbar nachdem der Balken die Sensorfläche abzudecken beginnt. Je kleiner die Sensorfläche ist, desto steiler ist der Signalanstieg. Die aktive Sensorfläche begrenzt nicht mehr das örtliche Auflösungsvermögen, wie bei der statischen Abtastung.

Nachteilig bei diesem Verfahren ist, daß man eine zusätzliche Weginformation benötigt, um eine gemessene Lichtschwächung einem exakten Punkt auf dem Bild zuordnen zu können. Beim CCD-Element ist dies automatisch gegeben durch die Positionen der einzelnen Pixel auf dem Sensorelement. Sie sind Bestandteil des Sensors und daher ortsfest.

Solch eine Wegmessung ist zu den Figuren 2-6 unter dem Stichwort kapazitiver Bildpositions- und Schrittweitensensor beschriebenen Positionssensor beschrieben worden.

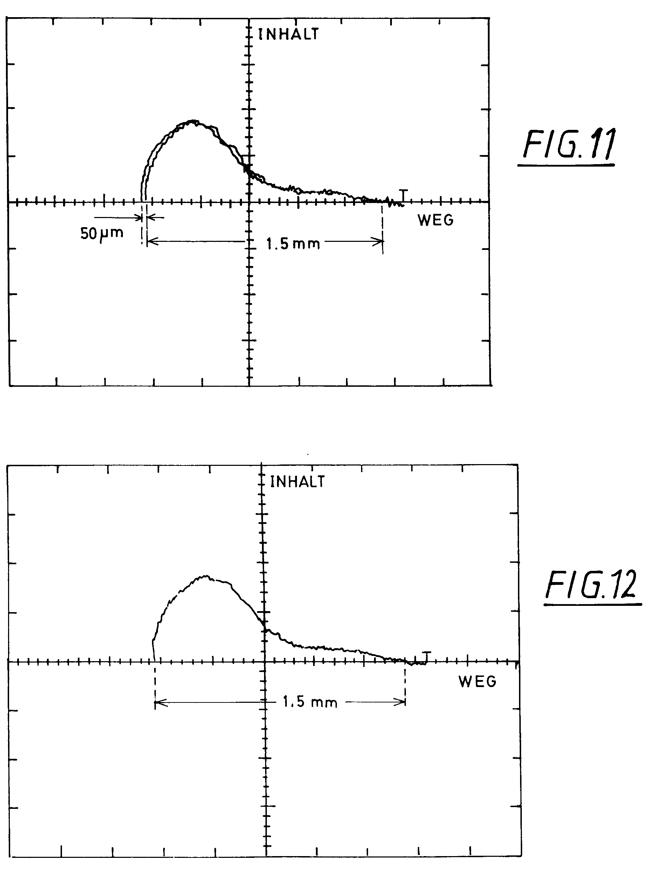

Nachfolgende Figur 11 zeigt eine nach diesem Verfahren in der Praxis durchgeführte Bildinhaltsmessung eines Filmbildes, gemessen mit Photodiode und kapazitivem Bildsensor. Das Bild wurde an einer Photodiode (1 x 1 mm») vorbeigezogen, der Film an dieser Stelle durch eine LED beleuchtet. Der zur Lichtschwächung zugehörige Transportweg wurde simultan mit einem kapazitiven Bildpositionssensor (der auch eine kontinuierliche Wegmessung erlaubt) gemessen. Die dargestellte Kurve zeigt den auf diese Weise gemessenen Bildinhalt. Das Sensorsignal ist in Bezug zum Weg aufgetragen. Daß diese Kurve für jedes Bild etwas anders aussieht, ist in diesem Zusammenhang unerheblich.

Die erhaltene Kurve wird gespeichert. Das zu dieser Kurve zugehörige Bild wird nun einen Schritt weitergeführt, an einer zweiten Photodiode vorbei, die in direkter Transportrichtung liegt und einen wohl definierten Abstand (19 mm) von dem ersten Sensor hat. Bei einem exakten Transportschritt überdecken sich beide Kurven und die Differenz ist gleich Null.

In der Figur 12 ist die Situation dargestellt, wenn ein Schrittfehler vorliegt. Der Verschiebeweg ŠWeg, der benötigt wird, um beide Kurven zur Deckung zu bringen, entspricht dem Steuersignal für den optischen Ausgleich. In der Darstellung liegt eine Abweichung von ca. 50 μm vor, gemessen mit einer Photodiode mit einer aktiven Sensorfläche von 1000 μm.

Mit dieser Methode ist keine ganzheitliche Erfassung des Bildinhaltes möglich, was auch nicht notwendig ist. Es genügt, wenn markante Profile gefunden werden, die eine Wiederauffindung des Bildinhaltes ermöglichen. Zur Steigerung der Genauigkeit können zwei Diodenarrays quer zur Transportrichtung des Filmes verwendet werden. Die jeweils gegenüberliegenden Dioden erzeugen die vom Bildinhalt abhängigen Konturen, die verglichen werden und das Steuersignal für den optischen Ausgleich liefern.

Die Figur 13 zeigt den schematischen Aufbau eines solchen vereinfachten Bildinhaltssensors. Das hier dargestellte Blockschaltbild des vereinfachten Bildinhaltssensors hat einen (z.B. kapazitiven) Wegsensor (47), welcher sein Signal einer Schaltung (48) zur Signalaufbereitung Transportweg übermittelt. Diese (48) erzeugt ein Ausgangssignal, welches zusammen mit dem Signal der optischen Bildabtastung (49) als Eingangssignal einer Schaltung (50) zur Bildinhaltsmarkierung dient. Deren Ausgangssignal ist dann das Steuersignal für den optischen Ausgleich (51).

Die Figur 14 zeigt die Zusammenhänge des Snelliusgesetzes in grafischer Darstellung, wie weiter vorne erörtert (S.7).

**Patentansprüche**

1. Verfahren zur Verringerung des Bildstandfehlers bei der Projektion von Filmen, wobei das Filmband (20) mit seiner Folge von Einzelbildern schrittweise an der Abbildungsoptik vorbeigeführt wird, wobei der Bildstandfehler durch einen Sensor (27) ermittelt und durch eine Schrittweitenkompensation kompensiert wird, gekennzeichnet durch eine Schrittweitenkompensation mittels eines optischen Kompensators (22), der in den Strahlengang des Filmprojektors vor dem Filmband oder dem optischen Aufnahmemedium eingesetzt wird, wie in Form wenigstens einer transparenten Platte, die gekippt werden kann, in Form eines Drehkeiles oder einer translatorisch verschiebbaren Linse.

2. Verfahren nach Anspruch 1, dadurch gekennzeichnet, daß eine Abtastung des Bildinhaltes eines Kinofilmes in einem Kinoprojektor zur bildinhaltgesteuerten Schrittweitenkompensation erfolgt.

3. Verfahren nach Anspruch 1 oder 2, dadurch gekennzeichnet, daß eine Bildabtastung durch einen optischen Sensor durch Vorbeiführung des Filmbildes an diesem Sensor erfolgt.

4. Verfahren nach einem der Ansprüche 1-3, dadurch gekennzeichnet, daß eine Erweiterung der Abtastung durch mehrere Sensoren zur Genauigkeitssteigerung erfolgt.

5. Verfahren nach einem der Ansprüche 1-4, dadurch gekennzeichnet, daß eine Ergänzung der optischen Sensoren durch den Transportweg des Filmes messende Sensoren zur Erfassung der Einzelbild spezifischen Helligkeitsverteilung (Konturverlauf) erfolgt.

6. Verfahren nach einem der Ansprüche 1-4, dadurch gekennzeichnet, daß eine Zwischenspeicherung eines gemessenen Konturverlaufes zur zeitversetzten Differenzmessung der bildspezifischen Konturen vor und nach dem Transportschritt erfolgt.

7. Verfahren nach einem der Ansprüche 1-4, dadurch gekennzeichnet, daß eine Regelung eines optischen oder anders gearteten Ausgleichs über eine Bildinhaltssteuerung erfolgt.

8. Verfahren nach einem der Ansprüche 1-4, dadurch gekennzeichnet, daß eine Bildabtastung direkt am Filmbild in unmittelbarer Nähe des Bildfensters erfolgt.

9. Verfahren nach einem der Ansprüche 1-8 , dadurch gekennzeichnet, daß mit kapazitiven Sensoren eine Schrittweitenmessung unabhängig von variierenden Lochformen erfolgt, da die Lochform für die erste und zweite Messung identisch sind, bedingt durch die spezielle Anordnung der Sensoren und die Speicherung des ersten Wertes für die spätere Differenzmessung.

10. Verfahren nach einem der Ansprüche 1-9, dadurch gekennzeichnet, daß eine Messung des vertikalen Bildversatzes durch kapazitive Sensoren erfolgt, die um 90° gedreht sind.

11. Verfahren nach einem der Ansprüche 1-4, dadurch gekennzeichnet, daß die Korrektur des Bildstandes basierend auf meßbaren Istwert-Abweichungen unter Verwendung der folgenden Schritte erfolgt:

a) Erfassung der Bildposition in Bezug zum Bildfenster (Projektionsebene);
b) Messung der Bildposition vor und nach einem Schritt; und
c) Messung des Transportweges des Filmbandes.

12. Verfahren nach einem der Ansprüche 1-4, dadurch gekennzeichnet, daß das Verfahren zur Bildstandkorrektur bei der Aufnahme mit einer Filmkamera verwendet wird.

13. Vorrichtung zur Messung der Bildposition bei der Projektion von Filmen, wobei das Filmband mit seiner Folge von Einzelbildern schrittweise an der Abbildungsoptik vorbeigeführt wird, unter Ausnutzung der Perforation des Filmbandes, dadurch gekennzeichnet, daß an der Perforation ein differentieller kapazitiver Sensor zur Messung des Bildstandfehlers angeordnet ist.

14. Vorrichtung nach Anspruch 13, dadurch gekennzeichnet, daß der Sensor aus zwei Kondensatoren aufgebaut ist, die der Lochform der Perforation angepaßt sind, und daß die beiden Kondensatoren symmetrisch zu einem Loch der Perforation angeordnet sind.

15. Vorrichtung nach Anspruch 13 oder 14, dadurch gekennzeichnet, daß in der Vorrichtung eine Parallelschaltung mehrerer Kondensatoren zur Genauigkeitserhöhung realisiert ist.

16. Vorrichtung nach einem der Ansprüche 13-15 , dadurch gekennzeichnet, daß der Sensor zur Messung der Filmposition direkt über dem Filmband in Höhe des Projektionsfensters angeordnet ist, unabhängig von der optischen Beschaffenheit des Filmes.

17. Vorrichtung nach einem der Ansprüche 1-16, dadurch gekennzeichnet, daß zwei Sensoren im Abstand der Sollschrittweite zur Messung der tatsächlichen Schrittweite in der Vorrichtung angeordnet sind.

18. Einrichtung zur Korrektur eines Bildstandfehlers von Filmen, wobei das Filmband mit seiner Folge von Einzelbildern schrittweise an der Abbildungsoptik vorbeigeführt wird, dadurch gekennzeichnet, daß vor dem Film (20) als optisches Speichermedium oder vor dem optischen Aufnahmemedium ein optischer Kompensator als Schrittweitenkompensator angeordnet ist, wie wenigstens eine kippbare transparente Platte (22), ein Drehkeil oder eine translatorisch verschiebbare Linse.

19. Einrichtung nach Anspruch 18, dadurch gekennzeichnet, daß der optische Kompensator eine kardanisch aufgehängte planparallele transparente Platte (22) ist, die unabhängig in zwei Richtungen gekippt werden kann.

20. Einrichtung nach Anspruch 18, dadurch gekennzeichnet, daß der optische Kompensator eine Linse im Abbildungsstrahlengang ist, die translatorisch (x/y) in einer Ebene senkrecht zur optischen Achse (z) verschoben werden kann.

**21.** Einrichtung nach Anspruch 18, dadurch gekennzeichnet, daß der optische Kompensator für eine Strahlverschiebung unter Verwendung von Drehkeilen aufgebaut ist.

**22.** Einrichtung nach einem der Ansprüche 18-21, dadurch gekennzeichnet, daß der optische Kompensator zur Korrektur eines horizontalen Bildstandfehlers verwendet ist.

**23.** Einrichtung nach einem der Ansprüche 18-21, dadurch gekennzeichnet, daß der optische Kompensator zur Korrektur eines vertikalen Bildstandfehlers verwendet ist.

**24.** Einrichtung nach einem der Ansprüche 18-21, dadurch gekennzeichnet, daß eine Kompensation des gesamten Bildstandfehlers durch Hintereinanderschaltung einzelner vertikal und horizontal wirkender optischer Kompensatoren vorhanden ist.

**25.** Einrichtung nach einem der Ansprüche 18-24, dadurch gekennzeichnet, daß zur Einstellung des optischen Kompensators in der Einrichtung ein Regelkreis enthalten ist.

**26.** Einrichtung nach einem der Ansprüche 18-24, dadurch gekennzeichnet, daß zur Einstellung des optischen Kompensators ein einfacher Antrieb in der Einrichtung enthalten ist.

**27.** Einrichtung nach einem der Ansprüche 18-26, dadurch gekennzeichnet, daß zur Messung der Schrittweite eine fest mit der Schaltrolle gekoppelten Indexscheibe (Tachogenerator) in der Einrichtung angebracht ist.

**28.** Einrichtung nach einem der Ansprüche 18-27, dadurch gekennzeichnet, daß eine Indexscheibe mit partiell hoher Winkelauflösung in der Einrichtung angeordnet ist, welche für eine Feinpositionierung entsprechend der Schrittweite verwendet wird.

# FIG. 1

$\delta h_{max}$  $\delta h_{phys}$  1

2

2

$\delta H$

# FIG. 2

3

C₁

4

C₂

3
C1

Transportrichtung

C2

# FIG. 3

A

HF

P₁

$UC_1$  $UC_2$

C₁  C₂

$U_D = UC_1 - UC_2$ ; $U_M = A_1 \cdot U_D$

I1  $U_D$

+ OV1  $U_M$

$C_2$  $D_2$  $U_{ss}$

+ OV 2  $U_a$

D₁  $C_3$

+
−

EP 0 805 375 A2

## FIG.4a

b

h

R 0.5

A

≡ | 0,15 | A

18,75 ± 0,05

$C'_{1a}$
$4a$
$C'_{2a}$
$C'_{1b}$
$4b$
$C'_{2b}$
$C'_{1c}$
$4c$
$C'_{2c}$
$C'_{1d}$
$4d$
$C'_{2d}$

5

3

$C'_{1a'}$
$4a'$
$C'_{2a'}$
$C'_{1b'}$
$4b'$
$C'_{2b'}$
$C'_{1c'}$
$4c'$
$C'_{2c'}$
$C'_{1d'}$
$4d'$
$C'_{2d'}$

## FIG.4b

$$\sum_{j=1}^{8} C_{2j}$$

*FIG.5*

*FIG.6*

Schnittanfang ↑       ↑ Schnittende

## _FIG. 7_

24

23

20 22

21

29

28

25

27

26

## _FIG. 8_

90°

30

## FIG. 9

## FIG. 13

BILDINHALT
(Balken)

POS. 1

POS. 2

POS. 3

SENSOR

$\leftarrow$ 1 mm $\rightarrow$

$\leftarrow$ 1 mm $\rightarrow$

*FIG. 10 a*

ZEIT

t1

t2

t3

SENSOR

*FIG. 10 b*

U

WEG

*FIG. 10 c*

_FIG.11_

_FIG.12_

FIG. 14